# EUROPEAN PATENT SPECIFICATION

(11) **EP 0 604 654 B1**
(45) Date of publication and mention of the grant of the patent: **28.04.1999**
(21) Application number: 93905349.2
(22) Date of filing: 24.02.1993
(51) Int. Cl.: D01F 9/133, D01F 9/127

(54) **REACTOR FOR THE PRODUCTION OF SHORT CERAMIC FIBERS FROM GAS**
REAKTOR ZUR HERSTELLUNG VON KURZEN KERAMISCHEN FASERN AUS GASEN
REACTEUR POUR LA PRODUCTION DE FIBRES CERAMIQUES COURTES A PARTIR DE GAZ

(30) Priority: 24.02.1992 ES 9200402
(43) Date of publication of application: 06.07.1994
(73) Proprietor: CONSEJO SUPERIOR DE INVESTIGACIONES CIENTIFICAS, 28006 Madrid (ES)
(72) Inventor: MADRONERO DE LA CAL, Antonio, ES-28007 Madrid (ES)
(74) Representative: Ungria Lopez, Javier
(86) International application number: ES9300012
(87) International publication number: WO9317159

(56) References cited:
- EP-A- 0 136 497
- US-A- 5 024 818

## Description

### TECHNICAL FIELD

Apparatus especially adapted to the manufacture of cabon filaments (DQ1F.)

Manufacture of carbon fibre from hydrocarbons.

### INTRODUCTION

Carbon fibres are used as a reinforcing element in the manufacture of materials composed of a polymeric, metallic or ceramic matrix. The level of characteristics of the composites depends, aside from other aspects such as amount of reinforcement included or direction of the fibre on the quality of the fibre, that determines the price thereof.

Consequently, the composites that should be produced at a moderate cost (for inexpensive products and a large market volume, such as seats and frames) are restricted to the use of only low price fibres, such as fibre glass.

High usage fibres, such as silicon carbide, aramide and carbon fibres are limited to use in those very high usage composites (aerospace industry and Defense industry, that may allow high costs.

Therefore, it is of the utmost interest to achieve the production of high usage fibres at a more affordable price. In this sense a lot of research has been done and, above all, regarding carbon fibre.

The carbon-graphite fibre concept covers a broad range of ceramic fibres of pure graphite from a chemical point of view, but with an ample variation with regard to the degree of graphitization thereof and the structure-properties relationship. Basically there are three big families:
i) ex-PAN carbon-graphite fibre, having such a name as it is manufactured from polyacrylonitrile (PAN) textile thread or rayon textile thread, which is roasted and pyrolized until only the strongly texturized skeleton of the graphite framework of the starting polymer or precursor remains. Basically by the energy consumption that the manufacture thereof implies, it is practically impossible to lower the price thereof; it is the typical fibre of the composites for aeronautics and space vehicles.
ii) ex-PITCH carbon-graphite fibre, having such a name as it is manufactured from pitch or tar, to which additives are added to stimulate the formation of a "mesophase." In a pasty state, the pitch is formed into a thread and then it is subjected to pyrolization treatment such as conventional graphite. The mechanical characteristics thereof are due to the reduced grain size of the graphite processed in this way. There was a time when it was thought that this ex-Pitch fibre was going to be the carbon fibre that was going to replace exPAN fibre due to the lower cost thereof, but the only types of high usage ex-Pitch fibres correspond to Young high modulus fibres and very reduced breakage elongation, thus the potential market thereof is very small.
iii) Unlike the two previous families, which have been available on the free market for quite some time, VGCF (Vapour Growth Carbon Fibres) are still in the laboratory-pilot plant stage and constitute the hopes of industries such as the automobile industry that is never going to be able to afford the cost of ex-PAN and ex-PITCH carbongraphite fibres.

### PRIOR ART

The production process thereof simply consists of the production of lampblack in which the special necessary precautions are taken so that the product becomes filamentous, just as it has been done in the manufacture of whiskers, no matter how much controversy there is about the physico-chemical mechanisms that control the formation of these fibres. The process consists of using some tiny metallic particles, which acting as seeds, receive all the carbon coming from the decomposition of the hydrocarbon and take on the form of filaments.

The experimental system for growing these fibres is extensively described in the bibliography (see G.G. Tibbetts "Vapour grown carbon fibers," Chapter of the book: J.L. Figueiredo et al. (Editors) "Carbon fibres filaments and composites" Kluwer Academic Publishers (1990) pag. 73-94; F. Benissad, P. Gadelle, M. Coulon and L. Bonnetain "Formation de fibres de carbone a partir du methane: I. Croissance catalytique et epaisseissement pyrolytique" Carbon, vol. 26 (1988) pag. 61-69; G.G. Tibbetts "From catalysis to chemical vapor deposition: graphite fibers from natural gas" Paper read at the Graphite Intercalation Compounds Congress organized by The Materials Research Society, Boston (USA) November 1984; M. Endo and H. Ueno "Growth and applications of vapor-grown carbon fibres" Paper read at the Graphite Intercalation Compounds Congress organized by the Materials Research Society, Boston (USA) November 1984.) A quartz tube inside of which, at temperatures slightly above 1000º C some finely ground transition metal seeds are placed, in an atmosphere of a mixture of hydrogen (that may be accompanied by CO), and a gaseous hydrocarbon, is used. The carbon is adsorbed by the metallic particles and the excess are given off in the form of carbonous filament.

Basically, there are two techniques to produce VGCF, in a fixed bed, wherein the seeds are very still and the only thing that moves is the mixture of reactive gases (the fibres are generated and grown fixed to the substrate or pan), and in a fluidized bed, wherein the seeds are drawn by the gases (just like wind which draws dust particles) while they are growing (M. Endo, A. Katoh, T. Sugiura and M. Shiraishi, "High resolution electromicroscopy on vapour-grown carbon fibres obtained by ultra-fine fluid catalyst" Paper read at the 18th. Biennial American Conference on Carbon. Worchester 1987). The VGCF which both techniques produce, are identical, though generally the fibres coming from the fixed bed have an average length slightly longer than fibres produced in a fluidized bed.

The two big difficulties, not yet overcome, which have hampered manufacturing on an industrial scale of VGCF (despite the large bibliography existing, VGCF have not come onto the free market at a commercial scale), are:
i) very short length
ii) very small amount of fibre produced per operating hour
The matter of fibre length is very restrictive, from the point of view of the short fibre sector market. There are manufacturing processes of composites, that are widely used, which require short fibre, but with a certain minimal length. Thus, for example, the SMC (Sheet Moulding Compound) process, by means of which some many automobile bumpers are manufactured, requires short fibres of approximately 2.5 cm.

In the case of fixed bed systems, which are capable of producing longer VGCF, the bibliography (F. Benissard, P. Gadelle, M. Coulon and L. Bonnetain "Formation de fibres de carbone a partir du methane. III: Influence de la nature du precurseur du catalyseur." Carbon, vol. 27 (1989) pag. 585-592; G.G. Tibbets "Length of carbon fibres grown from iron catalyst particles in natural gas" Journal of Crystal Growth, vol. 73 (1985) pag. 431-438) indicates to us that the average length of 1.5 mm. cannot be exceeded. The only document which cites that this fibre length is greatly exceeded is patent (14) (see below), wherein the length of 75 mm. is said to be achieved, though there is no explanation as to whether this length refers to the average length of the fibres obtained in a batch, or if (that which is most probable), the length of a few exceptionally long fibres appearing in the substrate or pan is referred to.

Looking for the quickest possible fibre production, the studies seeking the industrial production of VGCF, the fluidized bed systems, which produce fibre lengths of only 500 µm (patent 17), 5 µm < l < 5 mm. are usually chosen. The following list of patents, which we refer to by the numbers in parenthesis, consider these processes:
(1) JP-A-1-092425 VAPOUR PHASE GROWN CARBON FIBRE MANUFACTURE
   Authors: M. Endo, T. Okada, M. Ishioka, K. Nakazato, Y. Okuyama and K. Matsubara
   Applicant: Nippon Kokan K.K.
   Application date: 30 September 1987
   Patent application: 87/246178
(2) JP-A-1-092423 LOW COST VAPOUR PHASE GROWN CARBON FIBRE MANUFACTURE
   Author: M. Endo, M. Ishioka, T. Okada, K. Nakazato, Y. Okuyama and K. Matsubara
   Application date: 30 September 1987
   Applicant: Nippon Kokan K.K.
   Patent application: 87/246174
(3) JP-A-1-092420 LOW COST VAPOUR PHASE GROWN CARBON FIBRE MANUFACTURE
   Author: M. Endo, T. Okada, M. Ishioka, K. Nakazato, Y. Okuyama and K. Matsubara
   Application date: 30 September 1987
   Patent application: 87/246171
(4) JP-A-63-282313 VAPOUR PHASE GROWN ULTRAFINE CARBON FIBRE MANUFACTURE
   Author: M. Nakatini and Y. Komatsu
   Applicant: Asahi Chemical Industry Co. Ltd.
   Application date: 15 May 1987
   Patent application: 87/116663
(5) JP-A-62-282020 VAPOUR PHASE GROWN ULTRAFINE CARBON FIBRE MANUFACTURE
   Author: M. Nakatini and Y. Komatsu
   Applicant: Asahi Chemical Industry Co. Ltd.
   Application date: 26 May 1986
   Patent application: 86/120789
(6) JP-A-62-268819 VAPOUR PHASE GROWN ULTRAFINE CARBON FIBRE MANUFACTURE
   Author: A. Furuichi and Y. Komatsu
   Applicant: Asahi Chemical Industry Co. Ltd.
   Application date: 15 May 1986
   Patent application: 86/109606
(7) JP-A-61-225321 CARBON FIBRE MANUFACTURE
   Author: Y. Komatsu and K. Nakamura
   Applicant: Asahi Chemical Industry Co. Ltd.
   Application date: 23 May 1985
   Patent application: 85/58812
(8) JP-A-61-194223 VAPOUR PHASE GROWN CARBON FIBRE MANUFACTURE
   Applicant: Showa Denko K.K.
   Application date: 22 February 1985
   Patent application: 85/32817
(9) JP-A-1-104834 VAPOUR PHASE GROWN CARBON FIBRES MANUFACTURE
   Author: H. Ito and K. Murata
   Applicant: Mitsui Engineering and Shipbuilding Co. Ltd.
   Application date: 15 October 1987
   Patent application: 87/260139
(10) JP-A-1-085320 VAPOUR PHASE GROWN CARBON FIBRE MANUFACTURE USING LASER RADIATION
   Author: K. Murata, K. Sato and M. Matsumoto
   Applicant: Mitsui Engineering and Shipbuilding Co. Ltd.
   Application date: 28 September 1987
   Patent application: 87/243292
(11) JP-A-1-085321 VAPOUR PHASE GROWN CARBON FIBRE MANUFACTURE USING LASER RADIATION
   Author: K. Murata, K. Sato and M. Matsumoto
   Applicant: Mitsui Engineering and Shipbuilding Co. Ltd.
   Application date: 28 September 1987
   Patent application: 87/243293
(12) JP-A-61-055220 CARBON FIBRE MANUFACTURE
   Author: M. Murakami and S. Yoshimura
   Applicant: Research § Development Corporation of Japan
   Application date: 24 August 1984
(13) EP-A-0 214 302 (& WO-A-86 04937) MANUFACTURING CARBON FIBRES FROM A GASEOUS HYDROCARBON
   Author: Y. Komatsu
   Applicant: Showa Denko S.A.
   Publication date: 28 August 1986
(14) JP-A-60-81318 APPARATUS FOR THE MANUFACTURE OF CARBON FIBRE BY THE THERMAL DECOMPOSITION METHOD
   Author: K. Komaki and M. Watanabe
   Applicant: Showa Denko S.A.
   Publication date: 9 June 1983
(15) JP-A-63-12720 GASEOUS PHASE GROWN CARBON FIBRE MANUFACTURING METHOD
   Author: K. Okada et al.
   Applicant: Nippon Kokan Kabushiki, Tokyo
   Appl. no: 61-150838
   Publication date: 20 January 1988
(16) JP-A-63-92726 GASEOUS PHASE GROWN ULTRAFINE CARBON FIBRE MANUFACTURE
   Author: S. Marimoto
   Applicant: Showa Denko K.K.
   Application date: 1 October 1986
   Patent application: 86/233758
(17) JP-A-1-92421 GASEOUS PHASE GROWN CARBON FIBRE MANUFACTURING METHOD
   Authors: M. Endo, M. Ishioka, K. Nakazato, T. Okada, Y. Okuyama and K. Matsubara
   Applicant: Nippon Kokan K.K. Tokyo
   Patent nº at the Patent Office in Tokyo: 01-92421
   Application date: 30 September 1987
   Patent application: 87/246172
(18) JP-A-61-34221 PREPARATION OF MICROSCOPIC CARBONATED FIBRES BY A VAPOUR PHASE METHOD
   Author: K. Arakawa
   Applicant: Nikkiso Co. Ltd. Tokyo
   (EP-A-0 136 497 and EP-A-0 158 853)
   Application date: 27 July 1984
(19) WO-A-85 05383 PROCESS FOR THE MANUFACTURE OF DEPOSITED CARBON FIBRES FROM METHANE
   Author: M. Coulon, N. Kandani, L. Bonnetain and J. Maire
   Applicant: Le Carbon Lorraine
   Publication date: 5 December 1985
(20) EP-A-0 109 165 IMPROVED PROCESS FOR GRAPHITE FIBRE GROWTH
   Author: J.R. Bradley, J.M. Burkstrand and G.G. Tibbetts
   Application date: 4 October 1983
(21) US-A-4 565 684 (& EP-A-0 175 459) METHANE PYROLYSIS PROCESS
   Author: G.G. Tibbetts and M.G. Devour
(22) EP-A-0 132 909 FERRIC NITRATE TREATMENT FOR NUCLEATION OF GRAPHITE FIBRE GROWTH BY MEANS OF METHANE PYROLYSIS
   Author: G.G. Tibbetts
   Applicant: General Motors Corporation
   Application date: 13 February 1985
(23) EP-A-0 222 492 STIMULATION BY MEANS OF PRESSURE PULSES OF GRAPHITE FIBRE GROWTH
   Author: G.G. Tibbetts
   Applicant: General Motors Corporation
   Application date: 2 October 1986

On the other hand, there are very few options for the fixed bed (patents (12), (14) and (18)), though they obtain lengths of 100 µm < l < 500 µm (in patent (12)), 2 mm < l < 3 mm (in patent 18)), etc.

Therefore, it can be said, that in broad outline, the options of a fluidized bed tend to produce "crushed fibre" (hardly one millimeter long), while the possibilities of manufacturing "short fibre" (longer than 5 mm) are potentially attainable by a fixed bed, but improving with future research the efficiency of the equipment described in the above cited bibliography.

The other key issue, the production speed of VGCF during the manufacturing process, is likewise restrictive. Thus, for example, in patent (13), 6.5 g. of fibre are said to be achieved after 5 hours of production in a fluidized bed, while using a fixed bed, in patent (14) 2.5 g are said to be attained in 5 hours of operation (with the additional remark that in conventional systems, that are not specifically indicated, the production is of 1.8 g. in the same amount of time.)

We understand that the R + D efforts in this technology should be directed towards solving both aspects.

The invention as claimed provides for high yield production of fibers with increased length.

### BRIEF DESCRIPTION OF THE INVENTION

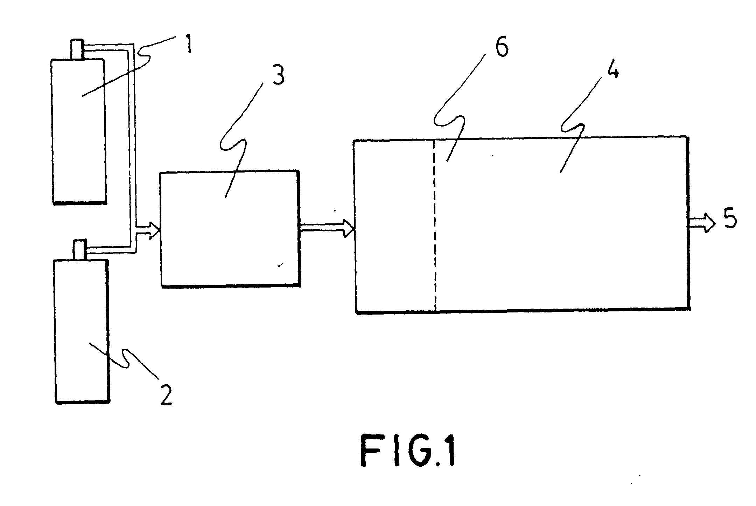

As is seen in figure 1, the obtainment of relatively long ceramic fibres by pyrolysis or reduction of suitable gases (hydrocarbons when carbon fibres are to be obtained, hydrogen-silicon chloride-hydrocarbon mixtures when silicon carbide fibres are to be obtained, etc.), is achieved by passing a gaseous mixture through a substrate (6) (in principle steel wire fabric or mesh) placed frontally to the direction of the gas stream and placed in an oven (4) where the gas reaches a temperature around 1000º C. The device, schematized in cited figure 1, consists of the corresponding gas tanks (1) Hydrocarbon tanks and (2) carrier and activator gas or gases, a mixing and preheating chamber (3), the cited oven (4) at whose outlet (5) the inflammable gases are collected or destroyed and the substrate or screen (6) from whose duly activated surface, the carbon fibres grow.

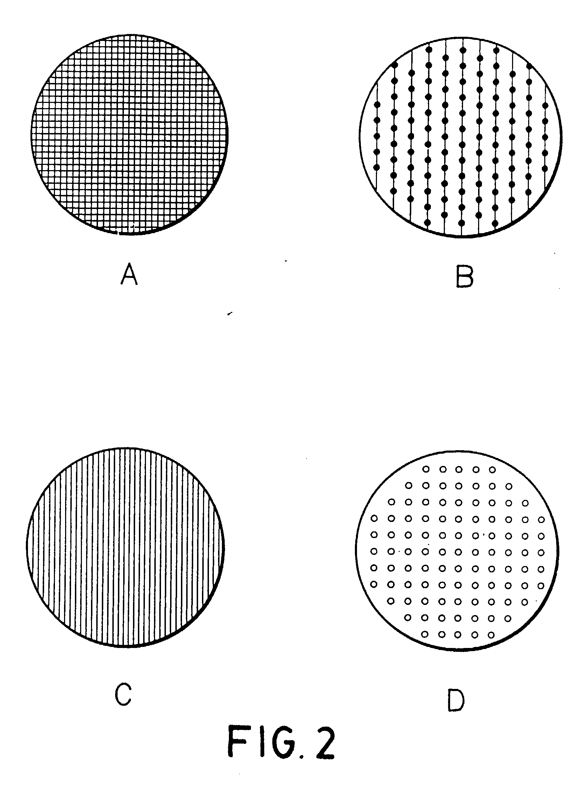

Starting from the fact that stainless steel is indicated in the bibliography as suitable material upon which fibres can grow, in principle (and without this being restrictive) stainless steel can be used to manufacture the substrate, which in accordance with the present invention, and as is shown in figure 2, can be
- A stainless steel wire metallic mesh with a suitable opening size
- An adequately thick steel sheet disk in which suitably sized holes are perforated

With these substrates it is achieved that the seeds that are formed do so separate from each other. For this purpose a conventional technique consisting of the disks, once they are cleaned, degreased and pickled with diluted hydrochloric acid, are seeded, applying some brush strokes of an alcohol solution of, for example, ferric nitrate (Fe(NO₃)₃ can be used.

The operating conditions of temperature, composition of the mixture and required time, are conventional. The operating temperature is, preferably 1065º C and the reactive atmosphere 85% hydrogen with 15% methane; the operating time is one hour.

The essential aspect of the invention is that the gas passes through the substrate located frontally to the flow, so that upon this flow (in which turbulences should be avoided) being parallel to the direction of growth of the fibres, the fibres can attain a length of up to 10 to 12 cm. with a thickness of 4 to 15 µm.

In the tips of the fibres, due to the required flow, the gas is renewed from the surroundings of the active end thereof, maintaining it with the entire methane content, that permits the continuity of the growth thereof.

In view of industrial production, it is convenient to reduce the opening size of the mesh (or the size of the holes) until the maximum coverage of the cross-section of the oven is achieved, leaving enough free space such that, without obstructions the stream of reactive gases that will feed the VGCF fibre growth, will pass through. It will also be interesting to place the maximum number possible of pans-substrates, so that in the useful cylindric-tubular space that the reactor-oven constitutes, the largest possible number of fibres are produced simultaneously.

### DETAILED DESCRIPTION OF THE INVENTION

As it has been indicated in figure 1, the device consists of a chamber (3) for preheating and homogenizing the mixture, which though it is not an essential part of the invention, from a practical point of view, it is essential for the purpose of saving energy and reducing the time required to reach the operating temperature.

Neither the geometry of the oven (unless it is tubular) nor the heating system is an essential part of the invention. Due to the easy adjustability thereof, electric heating is advisable. Heating by electric energy consumption allows for two equally valid variants, Joule effect heating and induction heating. In the first case, it takes longer to reach the operating temperature, and in the second case the equipment cost is higher.

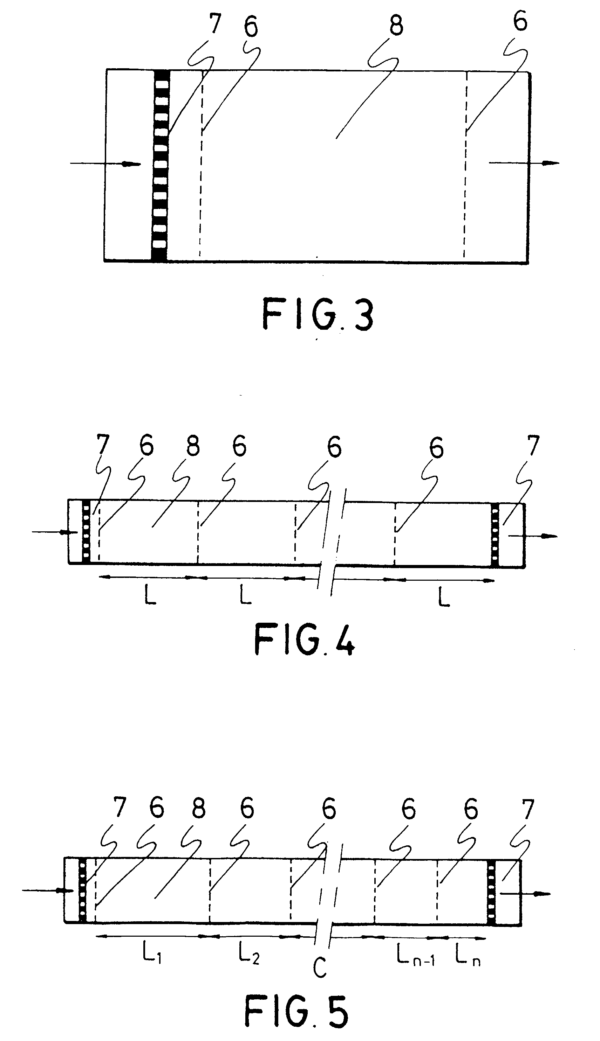

The simplest way to eliminate residual gases is done by burning them in a torch when, as usual, operating is done at atmospheric pressure; if there is a desire to vary this pressure, instead of in the torch they would be put in a sealed container with an adjusted pressure escape (pressure higher than atmospheric pressure), or a vacuum pump (pressure lower than atmospheric pressure.) In any case it is convenient to point out the following:
i) in all that which refers to dimensions, they basically depend on the production capacity provided for. The gas flow must be such that its linear speed (reducing its volume to normal conditions) is between 2 and 16 cm min⁻¹
ii) the substrates, which in principle may be the ones indicated in figure 2, can, in the strict meaning of the word, be used indistinctly in the Joule effect heating system as well as in the induction heating system. However, this subject will be dealt with hereinafter in greater detail.
iii) an essential improvement lies on the specialization of the supports in substrates and "masks." There is really no clear distinction between both concepts, since the two systems can be included in a single piece as it has been indicated up to now (figure 1.) It is simply that some geometries, corresponding to the ones that we associate with the concept of "mask", a word which indicates in an abbreviated form a "passive adjustment mask" consisting of a thin wall, with perforations made for this purpose, which due to their simple location opposite the stream of reactive gases, tends to improve the regularity and laminarity of the flow of gases. These masks play an important role as distributors-uniformers of the flow of gases inside the oven-reactor, having on the other hand very little effectiveness as generating trays of VGCF or fibers of another type of ceramic material, though hereinafter we are going to limit ourselves to VGCF, which are the ones most frequently used. Consequently, a very favourable option is to choose, as in the case of figure 4, an input-substrates-substrate"mask" and/or output "mask" pan sequence, so that the intermediate sub-produce the maximum VGCF, but this is an advantageous option, not a requirement.

In this sense, in figure 3, what we could call the basic unit of the invention is seen. This unit can be repeated a specific number of times as is observed in figure 4. At the input of the oven (4) it is very convenient (but not necessary) to have the mask (7) whose basic task is to regularly distribute the gas before it enters the substrate (6) where the carbon fibres are formed. Given that in a unit the hydrocarbon content of the gaseous mixture is not used up, this can pass on to the second unit and from the second unit to the third unit, etc. At the end of the last series of cascaded substrates, it is very convenient that there is a second mask (7) instead of a substrate, so that the turbulences that can be produced in the gas as a result of the strangulation at the output do not affect the laminar flow in the last unit, are avoided.

There is another optional aspect that can be seen by comparing figures 4 and 5. In the first one, length, L, of each unit is the same, while in the second one it is different, reducing in the direction of movement of the gas.

The reason is the following. When the mixture of reactive gases reaches the second substrate (which we will call S2), it is somewhat weakened since part of its carbon potential has been discharged in the feed of the growth of VGCF grown on the first substrate, S1. Consequently, after, for example, twenty minutes of operation, substrate S1 is populated with VGCF with an average length L, while the fibres grown on S2 have an average length shorter than L. Therefore, between the end of the fibres grown on S2 and the subsequent substrate S3 there is wasted space. Therefore, it is logical to place the substrates with a progressively smaller separation.

This does not mean that equidistant substrates can not be used. If, for example, the substrates are placed equidistant at 6 cm., logically a situation in which the VGCF grown on S1 would be reached, as a length of 6 cm. has been attained, their ends would touch substrate S2, which would cause their growth to stop. If the operation is now prolonged, the fibres grown on S2 begin to grow more rapidly, since now an atmosphere richer in hydrocarbons reaches them. Once the fibres grown on S2 reach substrate S3, a subsequent prolongation of the operating time permits the fibres grown on S3 to touch substrate S4 and so on.

In other words, one has the liberty to choose between fibres of a single size, which correspond to the situation of equidistant substrates and fibres with some graduated sizes, according to corresponding decreasing values of L. In the first case, the oven can be as long as desired, with an operating time that increases with its length. In the second case, the length of the operation can be minimized.

### DESCRIPTION OF THE SUBSTRATES

In the present description the word "substrate" is used to define an object upon which growth of the fibre takes place. The substrate is a support that either due to its own nature or because "seeds" are provided to it (the seeds will be referred to hereinafter) permits said growth.

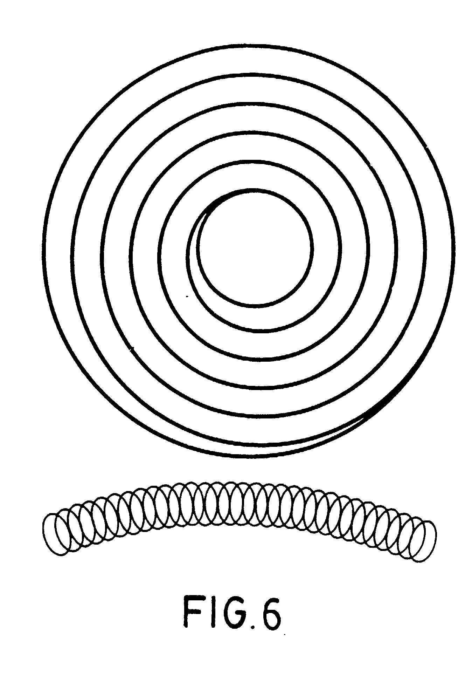

In figure 2 different geometric forms that can be given to the substrates, whose periphery has been drawn circular assuming that it has to adapt to a cylindrical frame has been shown, but they could also have another shape, for example, square. Figure 6 shows a different type of substrate formed by a spiral wound wire, to which, optionally, a second spiral of finer wire as shown in the bottom part of the figure may in turn be wound around this.

For example, in order to manufacture the latter, a wide range of metallic materials can be used with the sole requirements that they endure the operating temperature (between 600 and 1300º C) without deteriorating or lossing shape (none rust because the oven operates with a reducing atmosphere.) Base alloys Co, Ni, W and ferro-alloys, heat-resisting steels and stainless-heat-resisting steels are especially appropriate and they can be used in the qualities that are normally used in trade, Vitalium®, Nichrome®, Khantal®, Stellite®, commerial pure wolfram, etc.

In order to form the substrates described in figure 2, the alloys pointed out for the substrate of figure 6 can be used, or else any of the graphite board available in commerce for high temperature joints (normal brands Cardboard® of the firm Ashland in the USA and Papyex® manufactured in Francy by Le Carbonne Lorraine.)

In order to manufacture the substrate of the type of figure 2, any quality ceramic material may be used, alumina, mullite, silicon carbide, etc. In this case it is very convenient that the grooves or perforations have toothed edges, that improve the fertility of the substrate since they stimulate the accumulation of the tiny seeds.

The substrates can be used directly, in direct contact with the wall of the oven (which in this case acts as a frame), though it is preferable to use them wrapped in a steel wire tubular element.

### MASKS

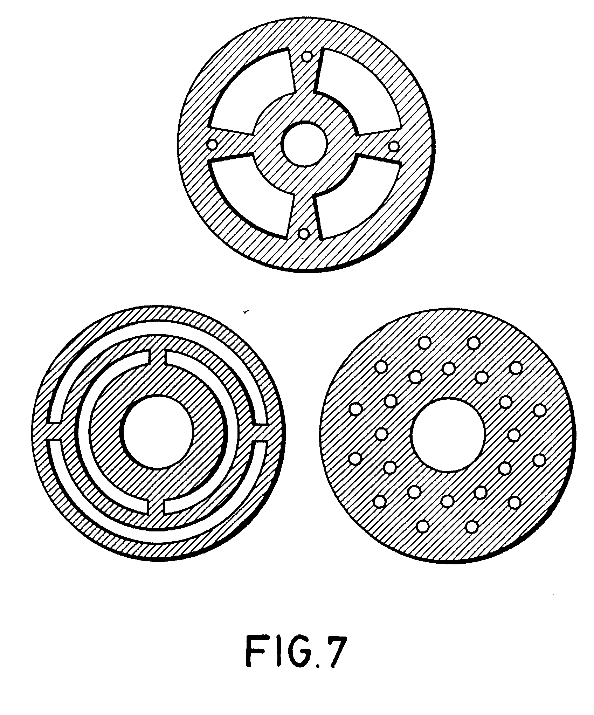

The mask, as it has already been defined (passive wall with flow adjustment perforations, located frontally to the direction of the flow) constitutes a perforated screen whose task is to provide a redistribution of the flow of gases to make it more uniform and regular and it must be placed, as seen in figures 3, 4 and 5, at the input and output of the gas. Use thereof is very convenient but it is not an essential part of the invention. In figure 7 different forms of masks with which goods results have been obtained are shown. Of course, these shapes can be varied without this affecting the essence of the invention.

They may be manufactured indistinctly out of the above cited graphite board or any other of the metallic or ceramic materials pointed out above.

### PREPARATION OF SEEDS AND MIXTURES FOR REACTIVE GASES

The use of certain substances that act as the germ to start the formation of the fibre which is essential for carrying out the invention is not a part of the same. Thus, here we will limit ourselves to gather the information disclosed in the bibliography concerning this subject, some already pointed out, as well as that which refers to mixtures of gases and operating temperatures.
i) Preparation of the seeds - In accordance with the techniques described, the following families of substances can be used as compounds whose reduction give rise to catalytically active seeds for this manufacturing.
   i.1) organometallic compounds, especially advisable to form seeds that give rise to very fine fibres (thickness <4 µm.)
   i.2) inorganic transition metal salts, especially appropriate (iron salts) to form fibres with an intermediate thickness (3 µm < φ <7 µm), or to form thick fibres (double anion salts) with a thickness of 5 µm < φ < 20 µm.

   Cr and Ni ferrocene, thiocene, metallocene, (Fe, Ni, Cr and Co) oxalates can be cited among organometallic compounds. Among inorganic salts we can indicate nitrates, nitrites, sulfates (and ammonium sulfates) and chlorides (along, mixed and with additions such as potassium and sodium hydroxide.) The same salts of Zr, V, W, Mo, Mn, Pd, Tr and Pt can also be used but less effectively. The dilution margins of each one are very broad and not very significant in their result; as a general rule it can be said that they are used in concentrations between 50% and 80% of the saturation concentration.
ii) Mixture for reactive gases - As to the composition of reactive atmospheres, it is always a mixture of reducing gas and of gaseous hydrocarbon, the latter being in a proportion of 5 to 40%. Pure hydrogen, which is the best option from a functional point of view, can be used, or to reduce costs, hydrogen with added CO, noble gases, carbon dioxide and SH₂ can be used. Practically all alkanes, such as methane, ethane, propane and butane can be used as hydrocarbons; alkenes, such as ethylene, butadiene, etc.; alkynes , such as acetylene, etc.; aryl hydrocarbons, such as benzene, toluene, styrene, etc.; condensed ring aromatic hydrocarbons, such as indene, naphthaline, phenanthrene, etc.; cycloparaffins, such as cyclopropane, cyclohexane, etc.; cycloolefins such as cyclopentene, cyclohexene, etc.; condensed ring alicyclic hydrocarbons, such as steroids, etc.; sulfurated aliphatic compounds such as methylthiol, methyl-ethylic sulfide, methyl ethyl sulfide, dimethylthioketone, etc.; sulfurated aromatic compounds, such as phenytrol, diphenylsulfide, etc.; sulfurated heterocyclic compounds such as benzothiophenone, thiophenone, etc. A simple kerosene or benzene can be used perfectly, as long as they are adequately vaporized.
   The structure and properties of the fibres produced depend very little on the hydrocarbon chosen, thus, the choice tends to be based on costs, degree of toxicity and hazard of use, process time, etc.
iii) Operating temperatures - As to the operating temperatures for the production of VGCF, the recognized margens are 600 to 1300º C, the optimal range being 900 to 1200º C.

### EXAMPLES

### Example nº 1

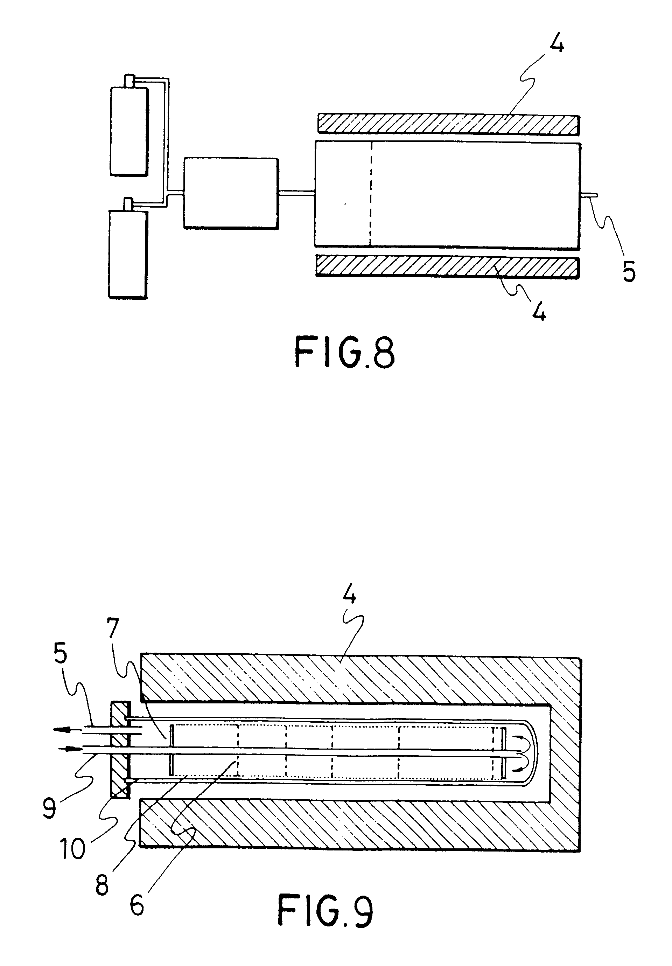

The dimensions of the fundamental device are given in figure 8.

### Example nº 2

The reactor with various compartments of decreasing length in the direction of the flow is shown schematically in figure 9. The operating conditions are the following:
* Joule effect heating
* Input mask, which appears in the top part of figure 7, made of graphite board
* Output mask, which appears in the bottom lefthand side of figure 7, made of 18/8 stainless steel sheet
* Four substrates like those of figure 6, made (the fine wire as well as the thick wire) of Khanthal A® (Co-Si alloy). a very usual material for making electric resistors. The separation distances are furnished in the figure
* All the substrates were seeded coating them with a small brush dipped in an alcohol solution of iron nitrate 60% saturation at room temperature
* Operating temperature 1065º C
* Operating cycle. A preheating process was started (only the propane flame of the preheater was used as an energy supply) with only Ar (600 dm³/min.) at a temperature increasing to 800º C; the preheating time lasted 15 minutes. Then, the electric energy control was turned on setting the reference temperature at 1065º C, setting the preheater at 650º C and cutting off the entry of Ar, introducing hydrogen only for five minutes. Afterwards the operating stage itself takes place for 20 minutes, the atmosphere being 88% H₂ and 12% CH₄. The operation ends with cooling with Ar.
* The results are given in TABLE I.

As it can be seen, in the four substrates a similar fibre density is obtained, since the amount of fibres obtained is proportional to the length of the same. If the operating time were extended, longer fibres in the final substrates would have been attained, whereby the production in grams of fibres would have increased a bit.

**TABLE I**

| | Fibres grown on the substrate | | | |
|---|---|---|---|---|
| | S₁ | S₂ | S₃ | S₄ |
| Average length in cm. | 6.1 | 5.0 | 3.0 | 1.5 |
| Average thickness in µm | 4-7 | 5-7 | 5-7 | 5-7 |
| Amount produced in g. | 0.078 | 0.058 | 0.041 | 0.014 |
| Total ......0.191 g | | | | |

### Example nº 3

Just like in the previous example, solely changing the use of a ammonium ferrous sulfate solution as the seed, which gives rise to thicker fibres although they have the same structure. The results obtained are given in TABLE II.

**TABLE II**

| | Fibres grown on the substrate | | | |
|---|---|---|---|---|
| | S₁ | S₂ | S₃ | S₄ |
| Average length in cm | 6.6 | 5.0 | 3.2 | 1.8 |
| Average thickness in µm | 5-11 | 5-11 | 5-11 | 5-11 |
| Amount produced in g | 0.150 | 0.103 | 0.078 | 0.030 |
| Total .... 0.361 g | | | | |

### Example nº 4

The present reactor can be used to obtain ceramic fibres other than carbon fibres. For example, using the mixture of gases and temperatures described by Motojima and Hasegawa (Journal of Crystal Growth, 87, (1988), 311-317), SiC fibres with the lengths and thicknesses described in the above examples for VGCF can be obtained. The operative conditions for this specific case are:

Metal salts are used as seeds.

The deposition temperature is kept between 1030 and 1200º C

An atmosphere formed by Si₂Cl₅, H₂ and Ar with a C/Si ratio of 2 and a minimum of 10% of H₂ and a maximum of Ar of 40% is used.

### DESCRIPTION OF THE FIGURES

### Figure 1

### General diagram of the device for obtaining fibres

(1) Hydrocarbon tank
(2) Carrier and/or activator gas tank
(3) Mixing and preheating chamber
(4) Oven
(5) Output where the inflammable gases are collected or destroyed
(6) Screen or substrate from whose duly activated surface the carbon fibres grow

### Figure 2

### Basic types of substrates

(A) 18/8 stainless steel mesh
(B) Rods with broadenings
(C) Smooth rods
(D) Perforated plates

### Figure 3

### Diagram of the basic carbon fibre production unit

(8) Frame
(7) Mask
(6) Substrate

### Figure 4

### Diagram of a group of units in tandem of an identical length

(8) Frame
(7) Mask
(6) Substrate
   L, length the marks the maximum length of the fibre

### Figure 5

### Diagram of a group of units in tandem with a decreasing length

(8) Frame
(7) Mask
(6) Substrate
   L₁, L₂, Lₙ₋₁, Lₙ, lengths that mark the maximum fibre length in each unit (L₁> L₂> ...> Lₙ₋₁ > Lₙ)

### Figure 6

### Spiral substrate

In the bottom part of the figure: Double spiral variant

### Figure 7

Different forms of masks

### Figure 8

### Arrangement of the standard reactor

(4) Electric oven
(5) Gas output where they are burned by means of a burner

### Figure 9

### Experimental assembly of multichambers of compartments of decreasing size

(4) Electric oven
(5) Gas output where they are burned by means of a burner
(9) Quartz preheated gas intake pipe
(10) Transparent quartz reactor
(8) Wire fabric frame
(6) Substrates
(7) Masks

## Claims

1. Reactor for the production of short ceramic fibers from gas, especially for the production of carbon fibers, comprising:
an oven (4) having an inlet and an outlet for a gaseous mixture containing hydrocarbons, said oven including means for defining a flow path for said gaseous mixture from said inlet to said outlet;
means for heating the gaseous mixture in order to decompose said gaseous mixture;
at least one substrate (6) placed in said oven (4) ;
characterized in that
said at least one substrate (6) extends across the flow path in a direction substantially perpendicularly to the direction of the flow path, there being a plurality of openings in said at least one substrate (6), such that the gaseous mixture can pass through said openings.

2. Reactor according to claim 1, comprising more than one substrate (6), wherein the substrates (6) are placed equidistantally along the flow path.

3. Reactor according to claim 1, comprising a plurality of substrates (6), wherein the distance between subsequent substrates decreases along the flow path in the direction from said inlet to said outlet.

4. Reactor according to any of the preceding claims, wherein at least one flow regulating mask (7) is situated in a position along said flow path.

5. Reactor according to claim 4, wherein at least one flow regulating mask (7) is situated between the inlet and the first substrate (6).

6. Reactor according to claim 4, wherein at least one flow regulating mask (7) is situated between the last substrate (6) and the outlet.

7. Reactor according to any of the preceding claims, further comprising a preheating chamber (3) wherein the gaseous mixture is preheated before reaching the inlet of the oven (4).

8. Reactor according to any of the preceding claims, wherein the substrates (6) are housed in a frame (8) that permits an easy insertion of the substrates in the oven (4).

9. Reactor according to any of the preceding claims, wherein at least one substrate comprises a wire mesh.

10. Reactor according to any of the preceding claims, wherein at least one substrate comprises a wire spiral.

11. Reactor according to the preceding claim, wherein at least one substrate comprises a spirally wound wire, around which wire a second spiral of finer wire is wound.

12. Reactor according to any of the preceding claims, wherein at least one substrate comprises a perforated disk.

13. Reactor according to any of the preceding claims, wherein at least one substrate is metallic.

14. Reactor according to the preceding claim, wherein at least one substrate is of stainless steel.

15. Reactor according to claim 12, wherein at least one substrate is a perforated disk of a ceramic material.

16. Reactor according to claim 15, wherein the openings in the disk have toothed edges, in order to improve the fertility of the substrate.

17. Reactor according to any of the preceding claims, wherein at least one substrate is wrapped in a steel wire tubular element.

18. Reactor according to any of the preceding claims, wherein the means for defining a flow path include a quartz housing.

19. Reactor according to any of the preceding claims, further comprising a burner at the outlet (5) for the gaseous mixture, for burning said mixture at said outlet.

20. Method for producing short ceramic fibers from gas, especially for producing carbon fibers, comprising the step of:
providing a gaseous mixture to an oven and making said gaseous mixture flow along a flow path in said oven; and
heating the gaseous mixture in order to decompose said gaseous mixture;
characterized in that
the gaseous mixture is led through openings in at least one substrate (6) placed in said oven (4) and extending across the flow path in a direction substantially perpendicularly to the direction of the flow path, there being a plurality of openings in said at least one substrate, such that the gaseous mixture can pass through said openings.

21. Method according to claim 20, further comprising the step of seeding said at least one substrate in order to facilitate the start of the formation of fibers.

## Patentansprüche

1. Reaktor für die Herstellung von kurzen keramischen Fasern aus Gas, insbesondere für die Herstellung von Kohlenstoff-Fasern, der umfaßt:
einen Ofen (4) mit einem Einlaß und einem Auslaß für ein gasförmiges Gemisch, das Kohlenwasserstoffe enthält, wobei der Ofen eine Einrichtung enthält, die einen Strömungsweg für das gasförmige Gemisch von dem Einlaß zu dem Auslaß bildet;
eine Einrichtung zum Erhitzen des gasförmigen Gemisches, um das gasförmige Gemisch aufzuspalten;
wenigstens ein Substrat (6), das in dem Ofen (4) angeordnet ist;
**dadurch gekennzeichnet,** daß:
das wenigstens eine Substrat (6) sich über den Strömungsweg in einer Richtung im wesentlichen senkrecht zur Richtung des Strömungswegs erstreckt und eine Vielzahl von Öffnungen in dem wenigstens einen Substrat (6) vorhanden ist, so daß das gasförmige Gemisch durch die Öffnungen hindurchtreten kann.

2. Reaktor nach Anspruch 1, der mehr als ein Substrat (6) umfaßt, wobei die Substrate (6) gleichmäßig beabstandet auf dem Strömungsweg angeordnet sind.

3. Reaktor nach Anspruch 1, der eine Vielzahl von Substraten (6) umfaßt, wobei der Abstand zwischen aufeinanderfolgenden Substraten auf dem Strömungsweg in der Richtung von dem Einlaß zu dem Auslaß abnimmt.

4. Reaktor nach einem der vorangehenden Ansprüche, wobei wenigstens eine Durchflußregelungsblende (7) an einer Position auf dem Strömungsweg angeordnet ist.

5. Reaktor nach Anspruch 4, wobei wenigstens eine Durchflußregelungsblende (7) zwischen dem Einlaß und dem ersten Substrat (6) angeordnet ist.

6. Reaktor nach Anspruch 4, wobei wenigstens eine Durchflußregelungsblende (7) zwischen dem letzten Substrat (6) und dem Auslaß angeordnet ist.

7. Reaktor nach einem der vorangehenden Ansprüche, der des weiteren eine Vorwärmkammer (3) umfaßt, in der das gasförmige Gemisch vorgewärmt wird, bevor es den Einlaß des Ofens (4) erreicht.

8. Reaktor nach einem der vorangehenden Ansprüche, wobei die Substrate (6) in einem Rahmen (8) aufgenommen sind, der leichtes Einsetzen der Substrate in den Ofen (4) ermöglicht.

9. Reaktor nach einem der vorangehenden Ansprüche, wobei wenigstens ein Substrat ein Drahtnetz umfaßt.

10. Reaktor nach einem der vorangehenden Ansprüche, wobei wenigstens ein Substrat eine Drahtspirale umfaßt.

11. Reaktor nach dem vorangehenden Anspruch, wobei wenigstens ein Substrat einen spiralförmig gewundenen Draht umfaßt, um den eine zweite Spirale aus feinerem Draht gewickelt ist.

12. Reaktor nach einem der vorangehenden Ansprüche, wobei wenigstens ein Substrat eine Lochscheibe umfaßt.

13. Reaktor nach einem der vorangehenden Ansprüche, wobei wenigstens ein Substrat aus Metall besteht.

14. Reaktor nach dem vorangehenden Anspruch, wobei wenigstens ein Substrat aus rostfreiem Stahl besteht.

15. Reaktor nach Anspruch 12, wobei wenigstens ein Substrat eine Lochscheibe aus einem keramischen Material ist.

16. Reaktor nach Anspruch 15, wobei die Öffnungen in der Scheibe gezahnte Ränder aufweisen, um die Ergiebigkeit des Substrats zu verbessern.

17. Reaktor nach einem der vorangehenden Ansprüche, wobei wenigstens ein Substrat in ein Stahldraht-Röhrenelement eingehüllt ist.

18. Reaktor nach einem der vorangehenden Ansprüche, wobei die Einrichtung, die einen Strömungsweg bildet, ein Quarzgehäuse enthält.

19. Reaktor nach einem der vorangehenden Ansprüche, der des weiteren einen Brenner an Auslaß (5) für das gasförmige Gemisch umfaßt, um das Gemisch an dem Auslaß zu verbrennen.

20. Verfahren zum Herstellen kurzer keramischer Fasern aus Gas, insbesondere zum Herstellen von Kohlenstoff-Fasern, das die folgenden Schritte umfaßt:
Einleiten eines gasförmigen Gemisches in einen Ofen, so daß das gasförmige Gemisch über einen Strömungsweg in dem Ofen strömt; und
Erhitzen des gasförmigen Gemisches, um das gasförmige Gemisch aufzuspalten;
**dadurch gekennzeichnet,** daß das gasförmige Gemisch durch Öffnungen in wenigstens einem Substrat (6) geleitet wird, das in dem Ofen (4) angeordnet ist und sich über den Strömungsweg in einer Richtung im wesentlichen senkrecht zur Richtung des Strömungswegs erstreckt, wobei eine Vielzahl von Öffnungen in dem wenigstens einen Substrat vorhanden ist, so daß das gasförmige Gemisch durch die Öffnungen hindurchtreten kann.

21. Verfahren nach Anspruch 20, das des weiteren den Schritt des Impfens des wenigstens einen Substrats umfaßt, um die Auslösung der Bildung von Fasern zu erleichtern.

## Revendications

1. Réacteur pour la production de fibres céramiques courtes à partir d'un gaz, en particulier pour la production de fibres de carbone, comprenant :
un four (4) comportant un orifice d'admission et un orifice de sortie pour un mélange gazeux contenant des hydrocarbures, ledit four comprenant des moyens pour définir un trajet de circulation pour ledit mélange gazeux dudit orifice d'admission audit orifice de sortie;
des moyens pour chauffer le mélange gazeux afin de décomposer ledit mélange gazeux;
au moins un substrat (6) placé dans ledit four (4);
caractérisé en ce que
ledit substrat (6) ou lesdits substrats (6) est (sont) placé(s) en travers du trajet de circulation dans une direction pratiquement perpendiculaire à la direction du trajet de circulation, il y a une pluralité d'ouvertures dans ledit ou lesdits substrat(s) (6), de sorte que le mélange gazeux peut passer à travers lesdites ouvertures.

2. Réacteur selon la revendication 1, comprenant plus d'un substrat (6), dans lequel les substrats (6) sont placés à égale distance les uns des autres le long du trajet de circulation.

3. Réacteur selon la revendication 1, comprenant une pluralité de substrats (6), dans lequel la distance entre deux substrats successifs décroît le long du trajet de circulation dans la direction allant dudit orifice d'admission audit orifice de sortie.

4. Réacteur selon l'une quelconque des revendications précédentes, dans lequel au moins un masque (7) de régulation du courant est situé en un point le long dudit trajet de circulation.

5. Réacteur selon la revendication 4, dans lequel au moins un masque (7) de régulation du courant est situé entre l'orifice d'admission et le premier substrat (6).

6. Réacteur selon la revendication 4, dans lequel au moins un masque (7) de régulation du courant est situé entre le dernier substrat (6) et l'orifice de sortie.

7. Réacteur selon l'une quelconque des revendications précédentes, comprenant de plus une chambre de préchauffage (3), dans laquelle le mélange gazeux est préchauffé avant d'atteindre l'orifice d'admission du four (4).

8. Réacteur selon l'une quelconque des revendications précédentes, dans lequel les substrats (6) sont logés dans un cadre (8) qui permet une insertion aisée des substrats dans le four (4).

9. Réacteur selon l'une quelconque des revendications précédentes, dans lequel au moins un substrat comprend un treillis en fil métallique.

10. Réacteur selon l'une quelconque des revendications précédentes, dans lequel au moins un substrat comprend une spirale en fil métallique.

11. Réacteur selon la revendication précédente, dans lequel au moins un substrat comprend un fil métallique enroulé en spirale, fil autour duquel on a enroulé une deuxième spirale de fil métallique plus fin.

12. Réacteur selon l'une quelconque des revendications précédentes, dans lequel au moins un substrat comprend un disque perforé.

13. Réacteur selon l'une quelconque des revendications précédentes, dans lequel au moins un substrat est métallique.

14. Réacteur selon la revendication précédente, dans lequel au moins un substrat est en acier inoxydable.

15. Réacteur selon la revendication 12, dans lequel au moins un substrat est un disque perforé en matériau céramique.

16. Réacteur selon la revendication 15, dans lequel les ouvertures dans le disque présentent des bords dentelés afin d'améliorer la fertilité du substrat.

17. Réacteur selon l'une quelconque des revendications précédentes, dans lequel au moins un substrat est enveloppé dans un élément tubulaire en fil d'acier.

18. Réacteur selon l'une quelconque des revendications précédentes, dans lequel les moyens pour définir un trajet de circulation comprennent un cadre en quartz.

19. Réacteur selon l'une quelconque des revendications précédentes, comprenant de plus un brûleur à l'orifice de sortie (5) pour le mélange gazeux, afin de brûler ledit mélange au niveau dudit orifice de sortie.

20. Procédé pour produire des fibres céramiques courtes à partir d'un gaz, en particulier pour produire des fibres de carbone, comprenant les étapes suivantes :
alimentation d'un four en un mélange gazeux et écoulement dudit mélange gazeux le long d'un trajet de circulation dans ledit four; et
chauffage du mélange gazeux afin de décomposer ledit mélange gazeux;
caractérisé en ce que
on fait passer le mélange gazeux à travers des ouvertures dans au moins un substrat (6) situé dans ledit four (4) et placé en travers du trajet de circulation dans une direction pratiquement perpendiculaire à la direction du trajet de circulation, il y a une pluralité d'ouvertures dans ledit ou lesdits substrat(s), de sorte que le mélange gazeux peut passer à travers lesdites ouvertures.

21. Procédé selon la revendication 20, comprenant de plus une étape d'ensemencement dudit ou desdits substrat(s) afin de faciliter l'amorçage de la formation des fibres.
